Europäisches Patentamt

European Patent Office

Office européen des brevets

(11) Publication number: **0 093 537**
**B1**

(12) **EUROPEAN PATENT SPECIFICATION**

(45) Date of publication of patent specification: **15.11.89**

(21) Application number: **83302201.5**

(22) Date of filing: **19.04.83**

(51) Int. Cl.⁴: **G 03 B 27/52**

(54) **Optical imaging system.**

(30) Priority: **30.04.82 US 373461**
**30.04.82 US 373462**

(43) Date of publication of application:
**09.11.83 Bulletin 83/45**

(45) Publication of the grant of the patent:
**15.11.89 Bulletin 89/46**

(84) Designated Contracting States:
**DE FR GB IT**

(56) References cited:
**EP-A-0 040 548**
**US-A-3 754 822**
**\US-A-4 129 373**

(73) Proprietor: **XEROX CORPORATION**
**Xerox Square - 020**
**Rochester New York 14644 (US)**

(72) Inventor: **Hinton, John Huning**
**676 Clevenger Road**
**Ontario New York 14519 (US)**
Inventor: **Costanza, Daniel Warren**
**1140 Woodbridge Lane**
**Webster New York 14580 (US)**
Inventor: **Rees, James Dunlap**
**5880 Palmyra Road**
**Pittsford New York 14534 (US)**
Inventor: **Durbin, John Alan**
**1283 Hunter Circle**
**Webster New York 14580 (US)**

(74) Representative: **Weatherald, Keith Baynes et al**
**Rank Xerox Limited Patent Department 364**
**Euston Road**
**London NW1 3BL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to an imaging system which utilizes a linear lens array in an optical system to transmit an image of a document at an object plane to an image plane at a reduction or enlargement value. More particularly, the invention relates to an imaging system which utilizes a moving document, a moving imaging assembly and a moving photoreceptor belt in a predetermined set of speed relationships.

Document reproduction systems utilizing linear lens array imaging systems are known to the art in two principal embodiments. U.S. Patent 3,544,190 is representative of these systems which utilize a linear stacked array of lenslets known as "strip lenses". U.S. Patent 3,977,777 is representative of those scanning systems utilizing a scanning lens array comprising bundled gradient index optical fibers. Both of these imaging systems are desirable for use, for example, in document reproduction machines because they transmit an erect image to an imaging plane, have a short total conjugate and greatly reduce the mass and expense associated with the conventional lens, multi-mirror scan systems. Gradient index lens arrays have especially found wide acceptance as replacements for conventional image transmitting components in copiers as disclosed, for example, in U.S. Patents 3,947,106 and 3,977,777. Each of these prior art copiers uses a single gradient index lens array to transmit images at a magnification of 1:1. Each of these imaging systems utilizes a fixed lens system, scanning being accomplished by moving the document past the lens in conjunction with a similar motion of a photoconductive imaging plane.

These systems, which can be characterized as moving platen or, more accurately, moving document systems, impose constraints on equipment size since the platen must travel the width of a document during the scan cycle.

Other scanning systems are known which accomplish the scanning function by moving a linear lens array beneath a fixed document. Illustrative of such systems are the scanning systems disclosed in U.S. 4,129,373 and Japanese Publication 55-1206.

A third system is known wherein the document, photoconductive imaging plane and linear lens array all move at speeds bearing a certain relationship to each other. This type of system, as disclosed in Japanese Publications 53-97436, 55-52074 and U.S. Patent 3,754,822 have the desirable characteristics of compactness coupled with increases in copy rate for a given process speed.

All of the above-disclosed systems are related to imaging systems which transmit images at unity (1×) magnification. An imaging system using a linear lens array in a multi-magnification mode system is disclosed in U.S. Patent 4,331,380 (EP—A—40548). In this patent, various reproduction systems are disclosed which utilize a gradient index lens array as the imaging device. One embodiment discloses a lens assembly consisting of a 1× array coupled with a reduction/er argement lens array. This system utilizes a moving platen and fixed lens array, the platen to photoreceptor speed changing during magnification changes to maintain proper image exposure at the photoreceptor. The present invention is directed to a modification of this system wherein the document, photoreceptor and lens array assembly are all moving in uniquely-defined relationships during a reduction or enlargement mode of operation. More specifically, the invention is directed to an imaging system for projecting an erect image of a document lying in an object plane onto a photoreceptor lying in an image plane parallel to said object plane at a plurality of alternative magnifications other than unity.

An additional feature of the above system is the added advantage of enabling the scanning system in a precession scanning mode in which the scanning of a document is accomplished at a faster rate than the process speed so as to cause the image at the image plane to be precessed, or moved, along the image plane in a direction opposite to the movement of the image plane. A major advantage of any precession system is that, it can reduce throughput time by using the process distance gained during the precession activity to accomplish a specific time-consuming activity such as placing a new document of the platen and/or returning the scan system to a start-of-scan position.

The invention is illustrated by way of example in the accompanying drawings, in which:

Figure 1 is a side schematic view of an optical scanning system at a start-of-scan position, wherein a document platen, reduction linear lens array and photoconductor are movable with respect to each other;

Figure 2 shows a side schematic view of the optical scanning system of Figure 1 at an end-of-scan position, wherein the document platen and lens array have moved in opposing directions at the same speed;

Figure 3 shows a side schematic view of the optical scanning system of Figure 1 at an end-of-scan position, wherein the document platen and lens array have moved in opposing directions, the lens speed being half the platen speed;

Figure 4 shows a side schematic view of a special case of Figure 1, wherein the document platen is fixed;

Figure 5 is a schematic showing a multi-magnification document reproduction system, wherein a gradient index lens array and associated lamp are utilized as an imaging assembly and wherein a platen, imaging assembly and photoreceptor are moved in the indicated direction at speedsd dependent upon the magnification mode selected;

Figure 6 shows a portion of a variable control drive system for driving the platen, imaging assembly and photoreceptor of Figure 5 at the desired speeds, and

Figure 7 shows a particular cable entrainment in the Fgure 6 control system.

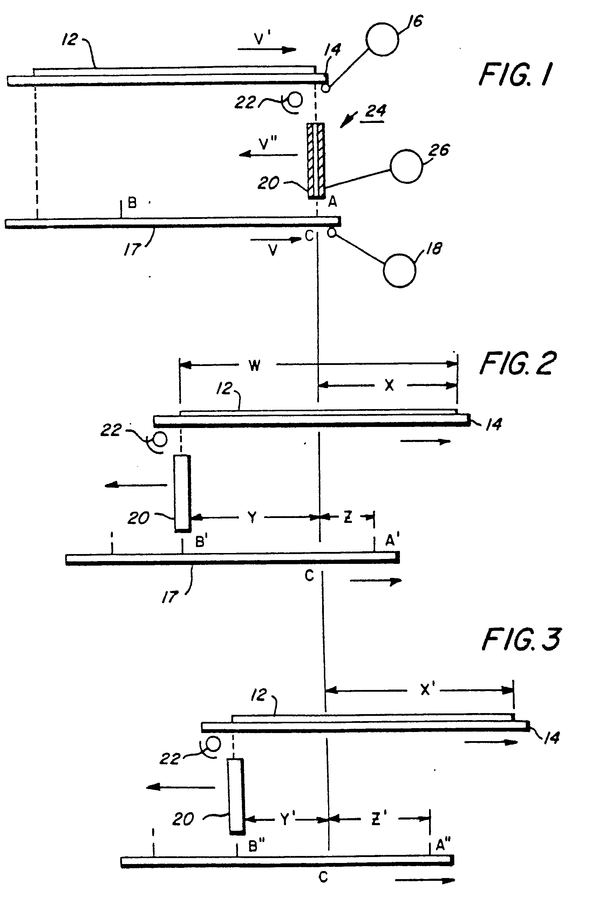

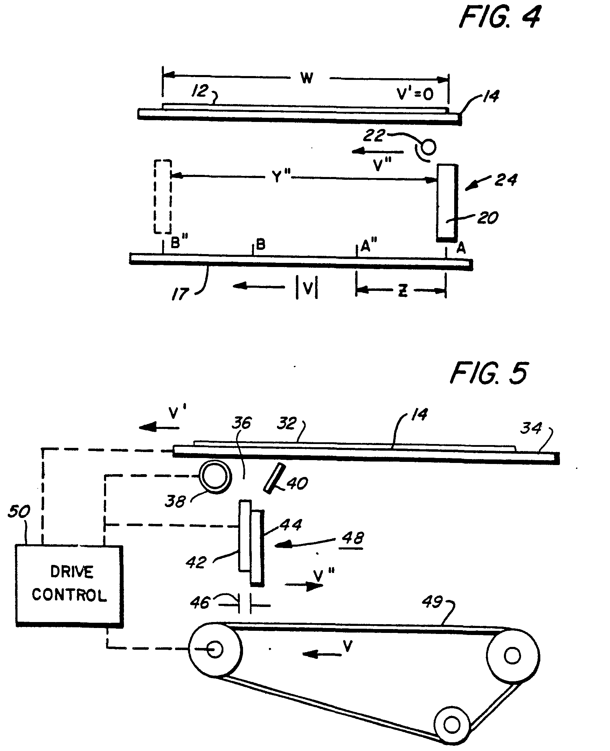

The following description, referenced to Figures 1—4, discloses the general principles of the invention wherein three separate movements of the document, lens and photoreceptor are prescribed to enable a reduction or enlargement mode. A specific drive means is then described with reference to Figures 5—7.

Figure 1 illustrates, in side view schematic, an optical system which utilizes a moving linear gradient index lens array to project a reduced image of a document moving through a scanning zone onto the surface of a moving photoreceptor. The system is shown at a start-of-scan position.

Referring to Figure 1, a document 12 is shown on a platen 14 which is movable along a horizontal plane during scanning operation by operation of a suitable drive means such as reversible drive motor 16. The movement during scanning is in the direction indicated by the solid arrow. A flat portion 17 of an endless loop photoreceptor belt lies in a plane which is parallel to that traversed by the platen. Belt 17 is continually driven by a suitable drive means such as motor 18, in the direction shown by the solid arrow during a scanning operatin.

A reduction gradient index array 20 is positioned in generally perpendicular orientation, between platen 14 and belt 17. Design details for construction of lens array 20 are provided in U.S. Patent 4,331,380. Attached to array 20 is an elongated lamp/reflector combination 22 which is adapted to provide a narrow, longitudinally extending, illumination strip along the bottom of platen.14. Lens array 20 and lamp/reflector combination 22 together form an imaging assembly 24. Assembly 24 is moved during scanning, in the direction shown by the arrow, by any suitable drive means such as reversible motor 26.

For purposes of the following discussion, the scanning rates of movement, or speeds, of the various moving comonents during a document scan operation are identified as follows:

photoreceptor speed=v
platen 14 (document 12) speed=v′
imaging assembly speed=v″

The general principle applicable to any document imaging system is that, to obtain properly-focused, blur-free imaging, the speed of the image being transmitted to the photoreceptor must be synchronized with the speed of the photoreceptor. For the system of Figure 1, this principle requires consideration of the object, image and photoreceptor speeds with regard to the imaging assembly speed.

To maintain the necessary image-to-photoreceptor speed ratio,

$$v' = \frac{v}{m} + \frac{v''(1-m)}{m} \qquad (1)$$

Equation (1) provides the general conditions for determining the necessary speed relationships which will enable the Figure 1 system. With a document of width w on the platen, the exposure speed is $v+v''$, the image width at the photoreceptor is mw, and the exposure time is

$$\frac{mw}{v+v''}$$

Then the necessary platen, lens, and photoreceptor displacements are defined by the following equations:

$$\text{Platen displacement} = \frac{v}{m} + \frac{v''(1-m)}{m} \cdot \frac{mw}{v+v''} = w - \frac{mv''w}{v+v''} \qquad (2)$$

$$\text{Imaging assembly displacement} = \frac{mv''w}{v+v''} \qquad (3)$$

and

$$\text{Photoreceptor displacement} = \frac{mvw}{v+v''} \qquad (4)$$

From the above equations, the sum of the platen displacement and the lens displacement equals the document width w for any value of imaging assembly speed v″, photoreceptor speed v or platen speed v′. Also, the imaging assembly displacement plus the photoreceptor displacement equals the image width mw for any value of v, v′ or v″.

The derivations of the above equations permit a system designer the necessary insights into designing a smear-free imaging system. There are, however, some speed relationships which are preferred because of the ease of obtaining them through the particular drive system to be employed.

The simplest solution is to drive both the platen and imaging assembly at the same speed; i.e..make v′ equal to v″. Solving Equation (1) for these conditions,

$$v''= \frac{v}{2m-1} \text{ or } v=v''(2m-1), \text{ for } v'=v''. \tag{5}$$

Figure 2 shows the Figure 1 system at an end-of-scan position with m=0.707× and v′=v″. Platen 14 and the imaging assembly 24 are moved from the start-of-scan position in Figure 1 to an end-of-scan position shown, at speeds v″=v′. Platen 14 is displaced a distance x which is equal to a lens displacement distance y. Both x and y=w/2. The total displacements (x+y) must therefore equal the width w of document 12. Photoreceptor 17 moves at a speed v determined by Equation (5) to point A′ for a displacement of z. Point B′ represents the end of the reduced image area. The sum of the lens displacement (y) plus the photoreceptor displacement (s) must equal the image width mw (distance from A to B). Figure 2 also illustrates an additional advantage of the present invention. As shown, imaging assembly 24 has moved during scan, in a direction opposite to the direction of belt 17. The image has thus been advanced along the photoreceptor until it reaches the end-of-scan position B′. The photoreceptor must now travel for some finite period t until point B′ arrives at point C representing the start-of-scan position, i.e. t=B′ C/v. During this time interval t, platen 14 and assembly 24 can easily be driven by their respective motors 16, 26 back to the start-of-scan positions. The next image can thus be formed on photoreceptor 17 with little or no inter-image separation, thereby increasing process throughput. The time t can also be used to replace document 12 with another document.

A second desirable lens-platen speed relationship is to drive the lens at one half the platen speed; i.e. make v″=v′/2. Solving equation (1) for this condition:

$$v''= \frac{v}{3m-1} \text{ or } v=v''(3m-1) \text{ for } v''=\frac{v'}{2} \tag{6}$$

Figure 3 shows the Figure 1 system at end-of-scan position for a m=0.707× and v″=v′/2. Platen 14 and imaging assembly 24 are moved from their start-of-scan position to the end-of-scan position shown at speeds v″=v′/2. Platen 14 is displaced a distance x′ which is twice the displacement of lens displacement y′, i.e. y′=w/3 and x′=2w/3. Total displacement of x′+y′ must still equal w. Photoreceptor 17 moves at a velocity determined by equation (6) to point A″ for a displacement z′. The sum of the lens displacement y′ plus the photoreceptor displacement z′ equals mw (.707w).

The speeds and displacements are to be determined for enlargement modes of operation using the principles set forth above.

The above description discloses a scanning system in which all interactive components, e.g. document, imaging assembly and photoreceptor, were moving at the prescribed relationships.

A special case exists in which these relationships are still valid even though one of the components (the platen) is held stationary. For this special case, the photoreceptor speed v is then related, from equation (1), to the magnification m and the speed of the scanning assembly v″, by the following expression:

$$v=v''(m-1), \text{ for } v'=0 \tag{7}$$

Again, with a document of width w placed on the platen, the exposure speed is v+v″=mv″ from Equation (7). The image width at the photoreceptor is mw and the exposure time is

$$\frac{mw}{mv''} = \frac{w}{v''}.$$

Then, the necessary platen, imaging assembly and photoreceptor displacements are defined as follows: Platen displacement equals zero; from equation (3), imaging assembly displacement equals w and, from equation (4) photoreceptor displacement equals (m−1)w.

Referring to Figure 4, there is shown a scanning system in which document 12 of width w is placed on stationary platen 14. A photoreceptor belt 17 is continually driven in the direction shown. Imaging assembly 24 is moved, during scanning, in a direction determined by the magnification factor m.

For reduction values of m<1 from equation (7), v will be negative; i.e. the photoreceptor will travel in the opposite direction to that shown in Figures 1—3. Figure 4 shows the lens and photoreceptor at the beginning and end-of-scan positions for a 0.707 reduction. At the beginning-of-scan, imaging assembly 24 is at the solid line position projecting the right-hand edge of the document onto point A of belt 17. By equation (7)

# EP 0 093 537 B1

$$|v''| = \left|\frac{v}{(m-1)}\right| 3.413 \, v.$$

Imaging assembly 24 scans the full width of the document to the dotted position, so the assembly 24 displacement value y'' is equal to w. Point A on the photoreceptor is displaced a distance of $|(m-1)|w$, or 0.293 w, to point A''. The reduced image is therefore projected onto belt 17 between points A'' B''.

For an enlarged image, either the imaging assembly or the photoreceptor must reverse direction. Since it is usually quite difficult to provide for two-way belt travel, the direction of assembly 24 would be reversed and the assembly would be moved at a speed determined by Equation (7). Thus, the start and end-of-scan positions shown in Figure 4 would be reversed.

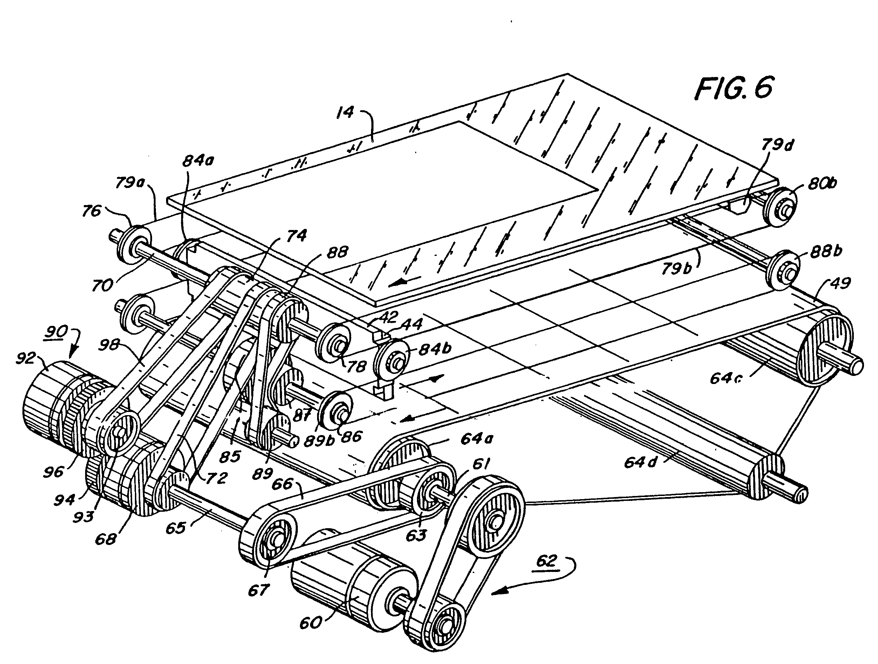

Figures 5 and 6 show an optical system which employs a simple drive means for enabling operation in a full range of magnifications, including unity. Referring to Figure 5, there is shown a scan system wherein a conventional 1× lens array is used in conjunction with a reduction/enlargement lens array designed for a particular magnification which, in the system disclosed, is a 0.707× reduction.

As shown in Figure 5, a document 32 is placed on platen 34 which is adapted to move at a speed v'. A constantly-changing exposure strip 36 is brightly illuminated by apertured lamp 38 acting in combination with a reflector 40. A gradient index lens array assembly movable at speed v'' includes gradient index lens array 42, which transmits an image at unity magnification, and a reduction lens array 44 connected to array 42. Shutter 46 is adapted to place the appropriate lens array into an optically transmitting position. Lamp 38, reflector 40, and lens arrays 42, 44 together form an imaging assembly 48. Depending upon the particular lens array which is enabled, a document image is transmitted to photoreceptor belt 49 moving at a speed v in the indicated direction.

Given the above relationships expressed in equation (1), it will be evident that the relative speeds of platen imaging assembly and photoreceptor will vary depending upon the particular magnification selected for the document reproduction. A unity magnification mode will require one set of speed relationships to be established, while a reduction or enlargement value will necessitate a change. According to the present invention, drive control system 50 is adaptaed to vary these speed relationships upon selection of a particular magnification mode.

Figure 6 shows a preferred embodiment of drive system 50 (shown in block form in Figure 2). This drive system translates an initial motion imparted to the photoreceptor belt 49 into the required motions of platen 34, imaging assembly 48 by using a combination of pulleys, drive cables and clutches. Referring to Figure 6, the system components are shown in a start-of-scan position, the imaging assembly scanning direction being from left to right, and platen and photoreceptor movement from right to left.

Photoreceptor belt 49 is continually driven in a counterclockwise direction at a speed v by means of motor 60 driving shaft 61 *via* belt/pulley assembly 62. Belt 49 is entrained about drive pulley 64a which is driven by shaft 61. The belt is driven in the counterclockwise direction being maintained in a flat exposure condition by entraining along roller pulleys 64a, 64b, 64c. The motion of drive pulley 63 is transmitted to jackshaft 65 *via* timing belt 66 entrained about pulley 63 and pulley 67. For the 1× reproduction mode of operation, belt 66 motion is transmitted in the same direction as platen 34 by energizing clutch 68. This action transmits the motion of jackshaft 65 to platen drive shaft 70 *via* belt 72 driving pulley 74. Shaft 70 drives a pair of capstan pulleys 76, 78, in a counterclockwise (scan) direction. Drive cables 79a, 79b are entrained about pulleys 76, 78 and idler pulleys 80a (not visible), 80b. Platen 34 is carried on a carriage arrangement (not shown) to which the drive cables are fixedly connected at ground points 79c (not visible) 79d.

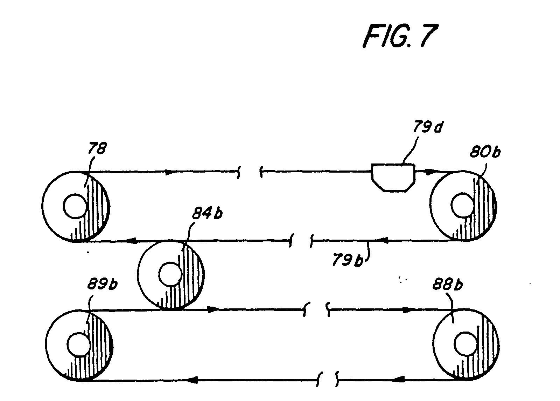

Lens arrays 42, 44 are fixedly connected to lens capstan pulleys 84a, 84b. Cables 79a, 79b are entrained about these capstans. The entire drive system formed by these cables is shown schematically in Figure 7 which depicts the connection of cable 79b. Starting from the right side of platen carriage ground point 69d, cable 79b makes a 180° turn about idler pulley 80b, a 180° turn about lens capstan pulley 84b, a 180° turn about idler pulleys 88b, 89b attached to the ends of shaft 86, and another 180° turn again about capstan pulley 84b. The cable is wrapped about drive pulley 78 and terminates at the left side of ground point 79d.

With this drive arrangement, it is possible to impact two speeds to lens arrays 42, 44, depending upon whether clutch 85 is engaged or disengaged. In the 1× mode, where lens array 42 is to be placed into the optical path, clutch 85 is disengaged and grounds shaft 86 and pulley 87, i.e. pulley 87 rotates freely without transmitting torque to shaft 86. For this situation, the lower portion of cables 79a, 79b which drive the lens arrays *via* pulleys 88a,b, 89a,b have an effective speed component of zero. The lens assembly is then being driven at a speed which is the average of the platen speed and the speed component supplied by shaft 86 (0). The lens assembly has a speed of $v'+0/2$ or $-v'/2$. By Equation (1) belt 49 speed $v=v'$. With the platen and belt moving leftward at a speed v', and the lens array moving rightward at $-v'/2$, a conventional 1×, full-rate half-rate scanning system is enabled.

For a reduction mode of operation, lens array 44 is placed in the optical path and appropriate signals are sent to motor 60 to increase the speed of the platen. Clutch 85 is engaged thus bringing drive belt 88, driven by platen drive pulley 89, into driving contact with lens drive pulley 87. Pulley 87 drives shaft 86 imparting a speed component to that shaft, and hence to the lower portion of cables 79a, 79b. This speed component is determined by the ratio of pulleys 76, 78, 84, 87 and 88a, 88b. For the reduction case, the resultant lens array 44 speed v'' is the average of the upper portion (platen drive) of cables 78a, 78b and the lower (lens drive) portion. This feature of the invention permits a flexible system which enables a linear lens array to be driven at any given speed by simply changing the pulley ratios of the platen and imaging assembly drive systems.

The systems thus far described can also be characterized as a precession type system. That is, the image being laid down on the photoreceptor surface during scan is being precessed or "walked" along the photoreceptor belt surface in a direction opposite to the belt motion. If the imaging assembly and platen are returned to the start-of-scan position at the scan speed, the next scan cycle can begin without the usual inter-document gap associated with fixed lens systems. This feature permits some relaxation in the rescan time and also frees up time to place a new document on the platen with minimal loss of throughput.

Additional means are required to return the scan components to the beginning of scan position. These are supplied by means of rescan drive assembly 90. A limit switch (not shown) at the end-of-scan position disengages scan clutch 68 and engages rescan clutch 92. Shaft 93 is then driven at the photoreceptor speed, causing rescan drive pulley 96 and rescan belt 98 to rotate in a clockwise direction. Belt 98 is entrained about platen drive pulley 74 and drives the capstan pulleys 76, 78 in a clockwise direction, reversing the motion of platen 34 and imaging assembly 48. These units will return to their assigned start-of-scan positions when another limit switch (not shown) disengages clutch 94 and reengages clutch 68.

Example

Table 1 lists the characteristics for an exemplary imaging system utilizing the moving platen mode described with reference to Figures 5 and 6. A process (photoreceptor) speed of 178 mm/sec is assumed. The values shown do not include the effects of the slit width (i.e. width w is slightly larger than the width of the document to be copied so as to take into account the typical 2—3 mm slit width) or the small displacements required for acceleration and deceleration.

## TABLE 1

| | | | | |
|---|---|---|---|---|
| Magnification (m) | 1.0 | 1.0 | 0.647 | 1.546 |
| Object width (w) (mm) | 215.9 | 431.8 | 431.8 | 279.4 |
| Photoreceptor (process) Speed (v) (mm/sec) | 177.8 | 177.8 | 177.8 | 177.8 |
| Imaging assembly speed (v'') (mm/sec) | 177.8 | 177.8 | 188.9 | 85.60 |
| Platen speed (v') (mm/sec) | 177.8 | 177.8 | 377.95 | 85.60 |
| v'/v'' | 1.0 | 1.0 | 0.5 | 1.0 |
| Exposure speed (mm/sec) | 355.6 | 355.6 | 366.77 | 262.89 |
| Exposure time (sec) | 0.61 | 1.21 | 0.76 | 1.64 |
| Platen displacement (mm) | 107.95 | 215.90 | 287.78 | 139.70 |
| Lens displacement (mm) | 107.95 | 215.90 | 144.02 | 139.70 |
| Photoreceptor displacement (mm) | 107.95 | 215.90 | 135.38 | 292.10 |

Other variations of the embodiments may be made consistent with the invention. For example, the rescan speed can be altered by changing the diameter of rescan pulley 96 relative to drive pulley 74. Thus, it is possible to rescan at a speed greater than the scan speed. By control of lamp illumination timing, the lens assembly can be used to transmit light onto spaces between document images.

While the described embodiments have utilized gradient index lens arrays as the imaging members, the invention is applicable to other linear imaging transmitters, such as lens strips or any imaging system which projects erect images onto a photosensitive plane.

Also, it may be pointed out that, while lens array 44 in the disclosed embodiments provided a reduction of the image, reversal of the lens array orientation provide an enlarged image at the photoreceptor.

## Claims

1. An optical system for projecting an erect image of a document (12) lying in an object plane on to a photoreceptor (17) at at least one magnification m (which may include unity), the system including:

an imaging assembly (20) positioned between the object plane and the photoreceptor;
means for driving the photoreceptor at a first speed v at the location at which the image impinges on it;
means for driving the document at a second speed v' in the same direction as the said location moves, and
means for driving the imaging assembly in the opposite direction at a third speed v'', the three speeds being related by the expression:

$$v' = \frac{v}{m} + v'' \frac{(1-m)}{m}$$

2. The imaging system of Claim 1, wherein the first, second and third driving means are incorporated in a single drive arrangement.

3. The imaging system of Claim 2, wherein v'=v''=v.

4. The imaging system of Claim 2, wherein

$$v''=v'/2.$$

5. The imaging system of Claim 2, or any claim dependent therefrom, wherein the document and the imaging assembly are moved from a start-of-scan to an end-of-scan position, the system further including reverse drive means to move the document and the assembly back to the start-of-scan position.

6. The system of any preceding claim, wherein the imaging assembly includes a first gradient index lens array for transmitting an image of the document on to the photoreceptor at unity magnification, and a second gradient index lens array for transmitting an image of the document on to the photoreceptor at a magnification other than unity.

**Patentansprüche**

1. Optisches System zur Projizieren eines aufrechten Bildes eines Dokuments (12), das auf einer Objektebene liegt, auf einen Photorezeptor (17) mit wenigstens einer Vergrößerung m (die auch 1 sein kann), enthaltend:
eine Abbildungsanordnung (20), die zwischen der Objektebene und dem Photorezeptor angeordnet ist;
eine Einrichtung zum Antreiben des Photorezeptors mit einer ersten Geschwindigkeit v an der Stelle, an der das Abbild auf ihn auftrifft;
eine Einrichtung zum Antreiben des Dokuments mit einer zweiten Geschwindigkeit v' in derselben Richtung, in der sich die genannte Stelle bewegt, und
eine Einrichtung zum Antreiben der Abbildungsanordnung in entgegengesetzter Richtung mit einer dritten Geschwindigkeit v'', wobei die drei Geschwindigkeiten gemäß folgender Gleichung miteinander in Beziehung stehen:

$$v' = \frac{v}{m} + v'' \frac{(1-m)}{m}$$

2. Abbildungssystem nach Anspruch 1, bei dem die ersten, zweiten und dritten Antriebeinrichtungen in einer einzigen Antriebsanordnung inkorporiert sind.

3. Abbildungssystem nach Anspruch 2, bei dem v'=v''=v.

4. Abbildungssystem nach Anspruch 2, bei dem

$$v''=v'/2$$

5. Abbildungssystem nach Anspruch 2 oder einem davon abhängigen Anspruch, bei dem das Dokument und die Abbildungsanordnung von einer Abtaststartposition in eine Abtastendposition bewegt werden, wobei das System weiterhin Rückführantriebseinrichtungen enthält, um das Dokument und die Anordnung in die Abtaststartposition rückzubewegen.

6. System nach einem der vorhergehenden Ansprüche, bei dem die Abbildungsanordnung eine ersten Gradientindexlinsenanordnung zum übertragen eines Abbildes des Dokuments auf den Photorezeptor mit der Vergrößerung 1 und eine zweite Gradientindexlinsenanordnung zum Übertragen eines Abbildes des Dokuments auf den Photorezeptor mit einer von 1 verschiedenen Vergrößerung enthält.

**Revendications**

1. Système optique pour projeter une image redressée d'un document (12) se trouvant dans un planobjet sur un photorécepteur (17) à au moins un groississement m (qui peut être égal à l'unité), le système comportant:

un ensemble d'imagerie (20) placé entre le plan-objet et le photorécepteur;

un moyen pour entraîner le photorécepteur à une première vitesse v à l'emplacement où l'image tombe sur son dessus;

un moyen pour entraîner le document à une seconde vitesse v' dans le même sens que la direction du mouvement de l'emplacement; et

un moyen pour entraîner l'ensemble d'imagerie dans la direction opposée à une troisième vitesse v'', les trois vitesses étant liées par l'expression:

$$v' = \frac{v}{m} + v'' \frac{(1-m)}{m}$$

2. Système d'imagerie selon la revendication 1, dans lequel les premier, second et troisième moyens d'entraînement sont incorporés dans un seul agencement d'entraînement.

3. Système d'imagerie selon la revendication 2, dans lequel $v' = v'' = v$.

4. Système d'imagerie selon la revendication 2, dans lequel:

$$v'' = v'/2.$$

5. Système d'imagerie selon la revendication 2, ou selon toute revendication dépendante, dans lequel le document et l'ensemble d'imagerie se déplacent entre une position de début de balayage et une position de fin de balayage, le système comprenant en outre un moyen d'entraînement inverse pour ramener le document et l'ensemble à la position de début du balayage.

6. Système selon l'une quelconque des revendications précédentes, dans lequel l'ensemble d'imagerie comprend un premier réseau de lentilles à gradient d'indice pour transmettre une image du document au photorécepteur à un grossissement égale à l'unité et un second réseau de lentilles à gradient d'indice pour transmettre une image du document au photorécepteur à un grossissement différent de l'unité.

FIG. 1

FIG. 2

FIG. 3

1

FIG. 4

FIG. 5

FIG.6

## FIG. 7